# EUROPEAN PATENT APPLICATION

(11) **EP 4 725 448 A1**
(43) Date of publication of application: **15.04.2026**
(21) Application number: 24383104.7
(22) Date of filing: 10.10.2024
(51) Int. Cl.: A61C 8/00

(54) **SCAN TAG AND SCAN BODY WITH SCAN TAG FOR ENHANCING ACCURACY IN INTRAORAL SCANNING PROCEDURES**

(71) Applicant: Iosfix Dental, SL, 28008 Madrid (ES)
(72) Inventor: ABRAMI, Gabriele, 25020 FLERO (IT); CROVATO, Diego, 35020 SAONARA (IT); GUIRAO CANO, Sergio, AD400 ALDOSA LA MASSANA (AD)
(74) Representative: Torner, Juncosa I Associats, SL

(57) **Abstract**

Scan tag and scan body with scan tag for enhancing accuracy in intraoral scanning procedures, the scan tag (1) including an attachment portion (10) including an attachment configuration (11), concentric with a first axis (1A), the attachment configuration (11) being attachable to a scan body (2) couplable to a patient implant, and an elongated portion (20) projecting laterally from the attachment portion (10) along a second axis (2A) transverse to the first axis (1A); wherein at least the elongated portion (20) is made of a scan-opaque material; and wherein at least a base region (21) of the elongated portion (20) adjacent to the attachment portion (10) is made of a flexible material configured to allow a bending/flexing of the elongated portion (20) with respect to the attachment portion (10) from an undeformed position to a deformed position.

## Description

### Technical field

The present invention is directed to a scan tag for enhancing accuracy in intraoral scanning procedures and also to a scan body with a scan tag for the same purpose.

Designing an implant-supported superstructure (e.g., denture, crown) may involve an initial process of obtaining dental impressions of the upper and/or lower jaw of a patient. Such impressions may be obtained using information obtained from intraoral scanning.

The accuracy of recording the position of multiple spaced apart implants across the patient's buccal arch is a common challenge that affects the consistency of the results.

To improve accuracy in such situations, scan bodies can be coupled to a patient implant implanted in the patient's jaw, typically threading the scan body into the patient implant. The scan body is made of a scan-opaque material and protrudes from the patient's gum in alignment with the patient's implant embedded in its jaw, said scan body offering more clearly recognizable reference points to precisely determine the position and angle of each implant within the buccal arch.

Some scan tags, also made of scan-opaque material, can be included or can be attached to one scan body, each scan tag protruding laterally from the corresponding scan body.

The scan tags are recognized as "landmarks" by scanning software (e.g., one or more design software tools). Accordingly, the scanning software produces a model showing the embedded (and otherwise invisible) implants, typically female screws. As such, aspects of the embedded implants (e.g., depth, width, angle, etc.) may be captured by precisely capturing the position of the scan bodies attached thereto. The distance and relative position between different scan bodies can be better and more precisely determined thanks to the inclusion of the scan tags to said scan bodies.

A superstructure (e.g., denture, crown) to be supported by the implants may then be designed accordingly.

### Background of the Invention

Intraoral scanning technology has revolutionized dental implant procedures by offering a better and more comfortable alternative than the traditional impression approach. Indeed, it has now become an important set of tools for modern digital dentistry, particularly in capturing highly accurate digital impressions when it comes to dental arches and implants. However, to be able to accomplish high accuracy in these digital impressions is, in fact, significantly challenging, especially in cases that are quite complicated, such as multiple-implant edentulous arches. Accuracy in intraoral scans depends on a variety of factors: scan body design and material, technique used for scanning, and the limitations inherent to intraoral scanners themselves.

Of all, full implant restorations are still challenging with respect to maintaining accuracy, especially in getting scans in an edentulous area where anatomical landmarks are at a minimum, and dealing with errors caused by soft tissues due to reflections and scatter. Such limitations mark the current state of the art with regard to intraoral scanning. In order for intraoral scanning to push forward both effectiveness and dependability in the most complex dental procedures, improvements in such limits are needed.

Various market solutions up to now have attempted to correct such various issues. Patents such as WO2021087549A1 and US2023320822A1, for example, include attachable devices to offer an improved scanning process, either by bettering the visibility of the scan tags or entirely superior anchoring devices. However, these solutions still have some certain limitations in real-life applications for poor adaptability to the oral cavity of the patient, such as limited available space, interference with adjacent teeth, and discomfort caused by the contact of hard and rigid materials with soft tissues.

In relation to this, many scientific studies investigated factors that affect accuracy at a scan view. For example, one systematic review indicated, by Gehrke et al., the shape of the scan body design, materials involved, up to the placing position within the dental arch, is important. These parameters significantly affect both the trueness-in other words, how close a scan approximates the real structure-and precision-the level of exactness with which repeated scans are performed-of digital impressions, as referred to in the following articles: "A systematic review of factors impacting intraoral scanning accuracy in implant dentistry with emphasis on scan tags", Peter Gehrke et al., International Journal of Implant Dentistry, 2024 10:20 and "Effect of novel prefabricated auxiliary devices attaching to scan tags on the accuracy of intraoral scanning of complete-arch with multiple implants: An in-vitro study", Hio Kuan Wu et al., Journal of Dentistry, 14 September 2023.

Intraoral scanning of multiple implants has special challenges according to the review in particular related to image stitching errors due to the limited anatomic landmarks available in edentulous mucosa. Recent studies have attempted to make up for these defects through the design of new auxiliary accessories. For instance, some different aforementioned publications, published in the Journal of Dentistry, introduced a new type of prefabricated Scan Body Clasp (SBC), which can be fixed to scan tags. These SBCs, including different geometric features, will provide more virtual artificial landmarks that will improve both trueness and precision in intraoral scans. It was proven in this study that placement of a low-level flat SBC near the mucosa can enhance scanning accuracy by providing a better stitching reference and hence reducing the potential errors due to the limitations of intraoral scanners.

However, since those scan tags are used as reference points for the precision of the three-dimensional scan of the patient's mouth, the scan tags are rigid to ensure a precise positioning thereof in regards the respective attachment portion.

These known scanner tags make their installation difficult, as care must be taken to ensure that they do not come into contact with the patient's gum, pressing against the gum when attached to the implant, causing discomfort or pain.

The present invention solves the above and other problems.

### Description of the Invention

According to a first aspect, the present invention concerns a scan tag for enhancing accuracy in intraoral scanning procedures, as defined in claim 1.

The proposed scan tag scan tag for enhancing accuracy in intraoral scanning procedures includes:
an attachment portion including an attachment configuration, concentric with a first axis, attachable to a scan body couplable to a patient implant, and
an elongated portion projecting laterally from the attachment portion along a second axis transverse to the first axis; wherein
at least the elongated portion is made of a scan-opaque material;

According to the above, the proposed scan tag includes an attachment portion including an attachment configuration intended to be attached to a scan body.

Typically, the patient has implants embedded in at least one of their jaws. A scan body can be attached to said implants, typically through complementary threads, the scan body protruding from the gun in a position and angle indicative of the position and angle of the implant. The attachment of the scan tag to the scan body improves the precision of the relative position between multiple scan bodies in the same intraoral scanning procedure.

The attaching configuration is concentric with a first axis. Said first axis, when the attaching configuration is attached to a scan body, is aligned with the central axis of the scan body, which in turn can be aligned with the central axis of the implant.

The elongated portion is a portion of the scan tag which projects laterally from the attachment portion, in a second axis transversal to the first axis mentioned above. According to this, the elongated portion is elongated along the second axis, which typically is a direction perpendicular to the first axis or a direction forming an angle of up to ± 30° with the direction perpendicular to the first axis.

It will be understood that a scan-opaque material is a material opaque to the wavelength used by the intraoral scanner to be used, for example to the visible light.

The present invention further proposes the following:
at least a base region of the elongated portion adjacent to the attachment portion is made of a flexible material configured to allow a bending/flexing of the elongated portion with respect to the attachment portion from an undeformed position to a deformed position.

Typically, this bending/flexing of the elongated portion is produced when the elongated portion is pressed against a patient's gum, during the attachment of the attachment portion to a patient implant. The deformation of the elongated portion towards the deformed position prevents the pression of the elongated portion against the gum to produce harm.

According to this, at least the base region of the elongated portion, which is the region connected to the attachment portion, is made of a flexible material. This provides flexibility at least to said connection allowing for the modification of the relative position between most of the elongated portion and the attachment portion.

This flexibility allows for an easier installation of the scan tag in the patient's mouth, because the scan tag can adapt to the topography of the patient's gum without producing discomfort to the patient and without damaging said patient's gum.

The inventor has surprisingly discovered that, contrary to what might be expected, the flexibility of the elongated portion, which allows it to deform, does not reduce the accuracy of the resulting scanner, since this deformation only occurs during the installation of the scanner body and not during the scanning process.

Preferably, the deformed position forms an angle of at least ±5° in regards the undeformed position, in other words, the flexible material allows for a movement of a distal region of the elongated portion from an undeformed position, aligned with the longitudinal axis, to a deformed position in which the distal region of the elongated portion forms an angle of at least ± 5° with the longitudinal axis.

It will be understood that the distal region of the elongated portion is the region of the elongated portion further away from the attachment portion.

According to the above, the newly proposed scan tag solves the limitations of the existing scan tags for enhancement of intraoral scanning procedures by providing a flexible and adaptable scan tag designed for attachment to scan bodies.

The proposed scan tag is a scan tag at least partially flexible designed to be connected to the scan bodies during the intraoral scanning procedure in digital dentistry.

The present invention enhances the accuracy of intraoral scanning procedures, in particular in edentulous cases with multiple implants, providing a much more practical and accurate digital impressions in implant dentistry.

The proposed scan tag, due to the flexibility of the material, adapts to special and anatomical contours in the mouth of the patient. For that reason, it easily applies to scan bodies in a comfortable manner and does not interfere with the scanning process.

Preferably, the entire elongated portion is made of the same flexible material.

Also, the attachment portion can be made of the flexible material, in which case the attachment configuration will be elastically expandable. This elastic expansion of the attachment configuration allows, for example, for a coupling of the scan tag to a scan body already installed on the patient's mouth by simply inserting the scan body in the attachment configuration producing its expansion.

The scan body may include a bulging head which can be inserted through the attachment configuration by elastically enlarging said attachment configuration, said bulging head providing retention to the scan tag to avoid an unintended release.

According to one embodiment the flexible material may have a shore hardness of at least 45.

The flexible material can be, or can comprise, silicone or silicone catalyzed with platinum.

For example, the scan tag can be made of a two-component addition-cured silicone catalyzed with platinum, giving the scan tag a shore hardness of 45 and heat resistance up to 250°C.

This kind of composition is required to be flexible yet retain structural integrity at high temperatures, in order to sterilize it hence making the proposed scan tag ideal for use in the oral cavity.

The proposed material properties allow reuse of the scan tag; hence, the sterilization of the scan tag is possible in an autoclave or disinfecting liquid solution, enough for hygiene standards in repeated use. Full flexibility, durability, and reusability make the proposed scan tag an efficient and practical tool to enhance accuracy and efficiency in intraoral scanning during dental implant procedures.

The elongated portion is preferably flattened defining a front side and a back side of the elongated portion, the back side being intended to face the patient's gum when installed. In this case, the average thickness of the elongated portion, defined between the front side and the back side, is preferably comprised between 1mm and 3mm.]

The elongated portion may include three-dimensional identification marks, preferably included in the front side of the elongated portion.

The three-dimensional identification marks can protrude from and/or can be embossed on the elongated portion or can be through-holes of the elongated portion.

According to a preferred embodiment of the present invention, the attachment configuration is a through hole coaxial with the first axis.

This solution provides several key improvements:
Improved Comfortability: While auxiliary scan tags known to date are rigid, the proposed scan tag is made from soft silicone, making it easier to fit into the patient's characteristic oral anatomy. This means that it would be comfortable between the teeth even when the scan tag touches the gingiva. Flexibility in the proposed scan tag translates to comfort for the patient while ensuring the scan tag itself does not interfere with the scanning process.
Visibility and better recognition: There are unique three-dimensional identification marks on the proposed scan tag which will be easily observable from scanning software. This allows for more continuity between scan bodies by optimizing their reconstruction process with clear, consistent reference points for the software to detect.
Minimization of reflection and scattering: Construction materials used in the development of the proposed scan tag are chosen for their potential capability to minimize light reflection and scattering, common issues that degrade the quality of digital impressions. The proposed scan tag improves the overall accuracy of the 3D models obtained from intraoral scans by minimizing these issues.
Simplification of the scanning process: The simple attachment configuration of the proposed scan tag offers a straightforward through-hole to secure the scan tag to the scan body. This saves time and reduces the complexity of installing auxiliary scanning aids, making this approach more clinically applicable.
Continuity of shape: The proposed scan tags ensure continuity of shape between scan bodies, allowing the software to stitch images accurately during the scanning process. This reduces the error rate, especially in long-span edentulous arches, where consistent reference points are crucial for achieving high trueness and precision.

The proposed scan tag will be highly superior to all available intraoral scanning aids because it overcomes some key issues: adaptability, ease of use, reduction of reflections, and increased recognition by the software. In this line, the accuracy of intraoral scans in complex cases with multiple implants or the presence of edentulous arches can be improved.

According to a second aspect, the present invention is also directed towards a scan body with scan tag.

In this case, the scan tag will be the scan tag described above and the scan body will be made of a scan-opaque material and will comprise a first portion connected to the attachment configuration of the scan tag and a second portion second portion configured to be couplable to the patient implant, for example through complementary threads.

The attachment configuration can be, for example, a through hole of the attachment portion concentric with the first axis, the intermediate region of the scan body being inserted in said through hole.

The attachment portion of the scan tag can be made of the flexible material, surrounding the intermediate portion of the scan body under elastic tension. According to this embodiment, the size of the through hole constitutive of the attachment configuration will be slightly smaller than the size of the intermediate portion of the scan body, so that said intermediate portion produces an elastic expansion of the attachment portion surrounding it creating an elastic tightening force around the intermediate region, which secures the position of the scan tag relative to the scan body.

According to another embodiment, the scan body may include a bulging head providing retention to the attachment configuration in the direction of the first axis.

The bulging head can be inserted through the attachment configuration by elastically enlarging said attachment configuration, said bulging head providing retention to the scan tag to avoid an unintended release from the scan body.

Alternatively, the scan body and the scan tag can also be a non-divisible object. For example, the scan tag can be obtained by over-moulding the flexible material around the non-flexible material constitutive of the scan body.

It will be understood that references to geometric position, such as parallel, perpendicular, tangent, etc. allow deviations up to ± 5° from the theoretical position defined by this nomenclature.

### Brief description of the Figures

The foregoing and other advantages and features will be fully understood from the following detailed description of an embodiment with reference to the accompanying drawings, to be taken in an illustrative and non-limitative manner, in which:
Fig. 1 shows a perspective view of the scan tag.
Fig. 2 shows a perspective view of the scan tag connected to a scan body.

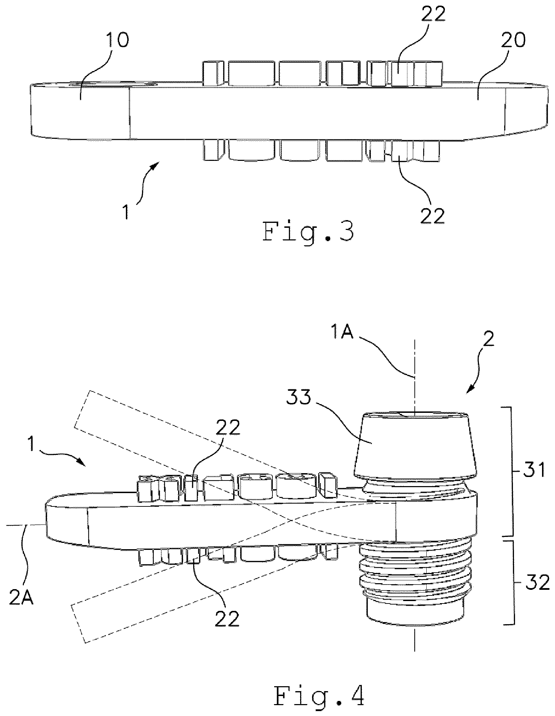

Fig. 3 shows a side view of the scan tag according to an embodiment including three-dimensional identification marks on both sides thereof.
Fig. 4 shows a side view of the scan tag shown in Fig. 3 but connected to a scan body, with an upward and a downward deformed positions indicated with dashed lines.

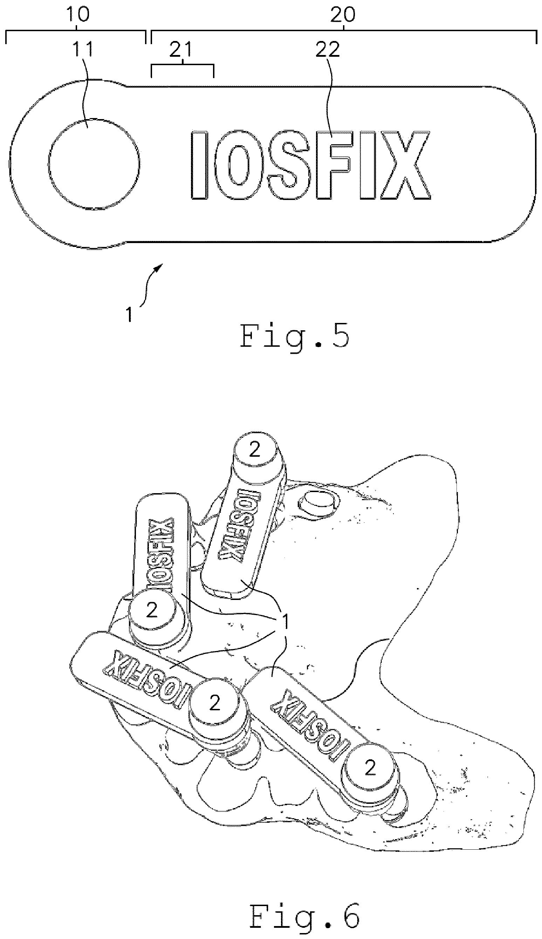

Fig. 5 shows a top view of the scan tag shown in Fig. 1.
Fig. 6 shows the patients gum with the scan tags and scan bodies attached thereto;

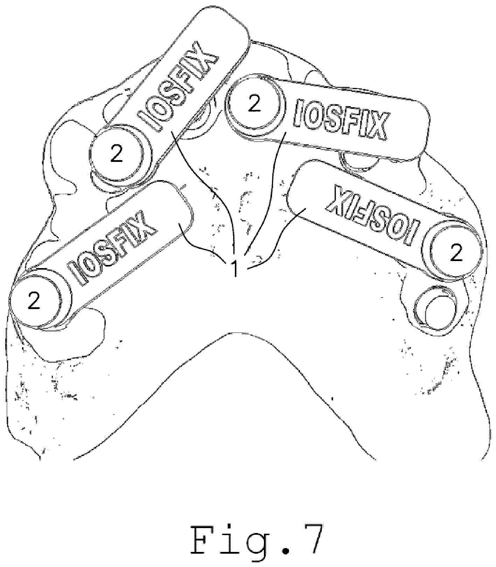

Fig. 7 shows a top view of the embodiment shown in Fig. 6.

### Detailed Description of the Invention and of particular embodiments

The proposed invention is directed towards a scan tag 1 for enhancing accuracy in intraoral scanning procedures.

Said scan tag 1 includes an attachment portion 10 and an elongated portion 20 projecting laterally from the attachment portion 10.

The attachment portion 10 includes an attachment configuration 11, for example a through-hole, concentric with a first axis 1A, attachable to a scan body 2, for example through insertion, the scan body 2 being couplable to a patient implant, typically by complementary threads.

The elongated portion 20 projects laterally from the attachment portion 10 along a second axis 2A transverse to the first axis 1A, i.e. a direction intersecting the first axis 1A.

At least the elongated portion 20, and preferably also the rest of the scan tag 1, is made of a scan-opaque material.

At least a base region 21 of the elongated portion 20, adjacent to the attachment portion 10, is made of a flexible material configured to allow a bending/flexing of the elongated portion 20 with respect to the attachment portion 10 from an undeformed position to a deformed position.

According to the above, said flexible material is configured to be capable of deformation when the elongated portion 20 is pressed against a patient's gum during attachment of the attachment portion 10 to a scan body 2 attached to the patient's implant or during the attachment of the scan body 2 with the scan tag 1 attached thereto to the patient's implant, without producing damage to the patient's gum.

The deformed position will form preferably an angle of at least ±5° in regards the undeformed position, ensuring a sufficient free of movement of the elongated portion 20.

Preferably not only the base region 21 of the elongated portion 20 but the entire elongated portion 20 is made of the same flexible material, allowing for the bending/flexing of the elongated portion along its entire longitude.

Also, the attachment portion 10 can be made of the same flexible material. In this case, the attachment configuration 11 will be elastically expandable.

The combination of the above features allows for a scan tag 1 made of a single piece, all with the same flexible material.

Alternatively, the attachment portion 10 and/or the region of the elongated portion 20 different to the base region 21, can be made of rigid material, in which case only portions of the scan tag 1 will be flexible.

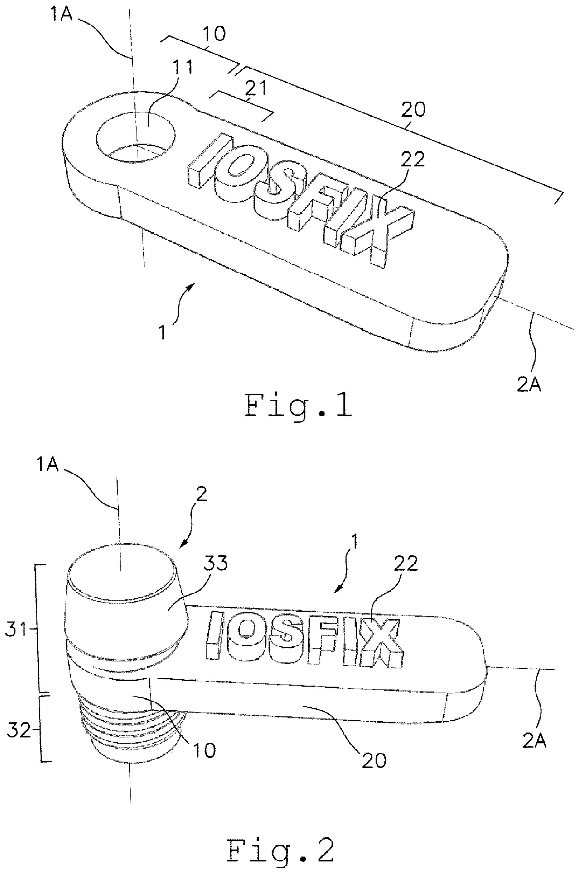

According to one proposed embodiment, shown in Fig. 1, the scan tag 1 is entirely made of soft silicone, including on its attachment portion 10 a through-hole as attachment configuration 11.

One scan body 2 can be inserted through said through-hole, as shown in Fig. 2, providing attachment between the scan body 2 and the scan tag 1.

The scan body 2 will be preferably made of a scan-opaque material and will comprise a first portion 31 connected to the attachment configuration 10 of the scan tag 1 and a second portion 32 configured to be couplable to the patient implant, typically by complementary threads.

The first portion 31 of the scan body 2 will have a configuration complementary to the attachment configuration 11 of the scan tag 1 to allow for a mutual coupling. For example, the attachment configuration 11 can be a through-hole of the attachment portion 10, and the first portion 31 of the scan body 2 can be inserted within said through-hole. Other attachment configurations 11, other than a through hole, are also envisaged.

The scan body 2 may have a bulging head 33 providing retention to the attachment configuration 11 in the direction of the first axis 1A.

The scan tag 1 has, for example, an average length comprised between 15 and 30 mm in the direction of the second axis 2A, an average width comprised between 4 mm and 8 mm in a direction perpendicular to the first axis 1A and second axis 2A, and/or an average thickness comprised between 1 and 3 mm in a direction parallel to the first axis 1A, being 2 mm the preferred thickness.

In one embodiment, the material used can be two-component addition-cured silicone, catalyzed with platinum, which gives flexibility and shore hardness of 45, and resistance up to high temperatures of 250°C. This makes the scan tag 1 reusable since it can be sterilized in an autoclave or disinfected in liquid.

The platinum added to the silicone material increases its durability and makes the flexible material scan-opaque and low-reflective hence improving the preciseness of the scan due to reduced reflection errors.

The proposed scan tag 1 is flexible, hence easier to place in the patient's mouth, and allows for any orientation and overlap with other adjacent scan tags 1.

The through-hole constitutive of the attachment configuration 11 allows for insertion on all types of scan bodies 2, particularly when the attachment portion 10 is made of the flexible material, since its elastic behavior enables it to adapt to larger scan bodies. The elastic expansion of the attachment portion 10 around a portion of the scan body 2 provides a dimensional tolerance giving stability to the attachment, obtaining a tight fit, avoiding rotation of the scan tag 1 during scanning.

Another potentiality is the positioning of the scan tag 1 at diverse heights along the scan body 2, making easier the overlap with adjacent scan tags 1 ensuring the continuity of the intraoral scan.

It is also proposed the inclusion of an easily visible three-dimensional identification marks 22, as shown in the Figures, which can be in the form of raised letters. Those raised letters are easily detectable by 3D reconstruction software. Because the three-dimensional identification marks 22 are three-dimensional, they can be recognized from any orientation or angle.

Because of these particularities, the scan tag 1 will be highly adaptable to the specific anatomical situation of the patient's mouth, regardless of remaining teeth, in those very complex cases with multiple implants or edentulous arches.

## Claims

1. Scan tag for enhancing accuracy in intraoral scanning procedures, the scan tag (1) including:
an attachment portion (10) including an attachment configuration (11), concentric with a first axis (1A), the attachment configuration (11) being attachable to a scan body (2) couplable to a patient implant, and
an elongated portion (20) projecting laterally from the attachment portion (10) along a second axis (2A) transverse to the first axis (1A);
wherein at least the elongated portion (20) is made of a scan-opaque material;
**characterized in that**
at least a base region (21) of the elongated portion (20) adjacent to the attachment portion (10) is made of a flexible material configured to allow a bending/flexing of the elongated portion (20) with respect to the attachment portion (10) from an undeformed position to a deformed position.

2. The scan tag according to claim 1 wherein in the deformed position the elongated portion (20) forms an angle of at least ±5° in regards the elongated portion (20) in the undeformed position.

3. The scan tag according to claim 1 or 2 wherein the entire elongated portion (20) is made of the same flexible material.

4. The scan tag according to claim 1, 2 or 3 wherein also the attachment portion (10) is made of the flexible material and thus the attachment configuration (11) is elastically expandable.

5. The scan tag according to any preceding claim wherein the flexible material has a shore hardness of at least 45.

6. The scan tag according to any preceding claim wherein the flexible material is or comprises silicone or silicone catalyzed with platinum.

7. The scan tag according to any preceding claim wherein the elongated portion (20) is flattened defining a front side and a back side.

8. The scan tag according to claim 7 wherein the average thickness of the elongated portion (20), defined between the front side and the back side, is comprised between 1 mm and 3mm.

9. The scan tag according to any preceding claim wherein the elongated portion (20) includes three-dimensional identification marks (22), or three-dimensional identification marks (22) included in the front side of the elongated portion (20).

10. The scan tag according to claim 9 wherein the three-dimensional identification marks (22) are protruding from and/or embossed on the elongated portion (20) or are through-holes of the elongated portion (20).

11. The scan tag according to any preceding claim wherein the attachment configuration (11) is a through hole of the attachment portion (10) coaxial with the first axis (1A).

12. Scan body with scan tag wherein
the scan tag (1) includes an attachment portion (10) including an attachment configuration (11), concentric with a first axis (1A), and an elongated portion (20) projecting laterally from the attachment portion (10) along a second axis (2A) transverse to the first axis (1A), at least the elongated portion (20) of the scan tag (1) being made of a scan-opaque material;
the scan body (2) is made of a scan-opaque material and comprises a first portion (31) connected to the attachment configuration (10) of the scan tag (1) and a second portion (32) configured to be couplable to the patient implant;
**characterized in that**
the scan tag (1) is the scan tag (1) described in any of the preceding claims.

13. The scan body with scan tag according to claim 12 wherein the attachment configuration (11) is a through hole of the attachment portion (10) concentric with the first axis (1A), the intermediate region of the scan body (2) being inserted in said through hole.

14. The scan body with scan tag according to claim 13 wherein the attachment portion (10) is made of the flexible material and surrounds the intermediate portion of the scan body (2) under elastic tension.

15. The scan body with scan tag according to claim 12, 13 or 14 wherein the scan body (2) has a bulging head (33) providing retention to the attachment configuration (11) in the direction of the first axis (1A).
